(19) Europäisches Patentamt
European Patent Office
Office européen des brevets

(11) Veröffentlichungsnummer: **0 280 946 B1**

# (12) EUROPÄISCHE PATENTSCHRIFT

(45) Veröffentlichungstag der Patentschrift: **02.12.92**

(51) Int. Cl.$^5$: **C07F 7/18**

(21) Anmeldenummer: **88102050.7**

(22) Anmeldetag: **12.02.88**

## (54) Benzoylthioharnstoffgruppenhaltige Organosilane, Verfahren zu ihrer Herstellung.

(30) Priorität: **28.02.87 DE 3706521**

(43) Veröffentlichungstag der Anmeldung:
**07.09.88 Patentblatt 88/36**

(45) Bekanntmachung des Hinweises auf die Patenterteilung:
**02.12.92 Patentblatt 92/49**

(84) Benannte Vertragsstaaten:
**AT BE CH DE FR GB IT LI LU NL**

(56) Entgegenhaltungen:
**EP-A- 0 126 934**
**DD-A- 212 190**

(73) Patentinhaber: **Degussa Aktiengesellschaft**
**Weissfrauenstrasse 9**
**W-6000 Frankfurt am Main 1(DE)**

(72) Erfinder: **Panster, Peter, Dr.**
**Im Lochseif 8**
**W-6458 Rodenbach(DE)**
Erfinder: **Grethe, Horst**
**Vor der Pulvermühle 3a**
**W-6450 Hanau 11(DE)**
Erfinder: **Kleinschmit, Peter, Dr.**
**Wildaustrasse 19**
**W-6450 Hanau 9(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue Benzoylthioharnstoffgruppen-haltige Organosilane, die zur Herstellung von unlöslichen Metalladsorbersystemen auf Basis anorganischer Polymergerüste verwendet werden können. Daneben werden auch Verfahren zur Herstellung dieser neuen Produkte beschrieben.

Die Abtrennung von Metallen aus wäßrigen und organischen Lösungen stellt in verschiedenen Bereichen der Industrie ein großes Problem dar. Einerseits z. B. aus Gründen der Wiedergewinnung wertvoller Metalle oder andererseits z. B. aus Gründen des Umweltschutzes werden dabei verschiedene Verfahren und Techniken praktiziert. Häufig üblich ist der Einsatz von geeignet modifizierten organischen Polymeren (z. B. DD-PS 207 915, 212 190, 212 257 oder US-PS 4 448 694) oder die Verwendung von flüssigen oder gelösten Komplexbildungsagenzien (DE-PS 33 40 055 und 33 40 056, DE-OS 33 47 406).

Diese Verfahren sind häufig jedoch nicht praktizierbar. Einerseits sind die verwendeten organischen Polymerträger aufgrund ihrer zu geringen Temperatur- und Lösungsmittelstabilität den Anforderungen nicht gewachsen und andererseits erfordert der Einsatz von flüssigen oder gelösten Komplexbildnern einen teilweise beträchtlichen technischen Aufwand.

Günstiger ist grundsätzlich die Verwendung von Systemen, die auf einem anorganischen Polymergerüst basieren, wie dies z. B. im Fall von Kieselgel gegeben ist. Derartige Systeme besitzen eine höhere Temperatur- und Lösungsmittelstabilität (GB-PS 1 532 295).

Aufgabe der Erfindung ist, geeignet substituierte Organosilane zu entwickeln, die zur Herstellung von Metalladsorbersystemen auf Basis eines anorganischen Polymergerüstes verwendet werden können. Dies kann einerseits durch Verwendung und Modifizierung eines der üblichen anorganischen Polymersysteme, wie z. B. $SiO_2$, $Al_2O_3$, $TiO_2$, oder andererseits durch Herstellung von entsprechenden organofunktionellen Polysiloxanen geschehen. Dabei erschien es besonders sinnvoll, als komplexierende Einheit eine Benzoylthioharnstoffgruppe zu verwenden, die sich als besonders effektiv erwiesen hat (DE-PS 33 40 055 bzw. 33 40 056 oder DD-PS 212 190).

Diese Aufgabe wurde dadurch gelöst, daß neue Benzoylthioharnstoffgruppen-haltige Organosilane gemäß Anspruch 1 entwickelt wurden. Bei den erfindungsgemäßen Verbindungen gemäß Formeln (1) und (2) kann gemäß Anspruch 2 $R^4$ eine lineare oder verzweigte Alkylengruppe sein.

Die erfindungsgemäßen Verbindungen gemäß Anspruch 3 und Formel (3) stellen bevorzugte Zusammensetzungen der neuen Benzoylthioharnstoffgruppen-haltigen Organosilane dar. Diese Bevorzugung resultiert vor allem aus der besonders guten Verfügbarkeit der Ausgangsmaterialien.

Entsprechendes gilt auch für die erfindungsgemäßen Verbindungen gemäß Anspruch 4, die sich auch durch eine besonders gute Verfügbarkeit der Ausgangsmaterialien und durch die besonderen stofflichen Eigenschaften der daraus herstellbaren Organopolysiloxane auszuzeichnen.

Gegenstand der Erfindung ist auch ein Verfahren zur Herstellung der neuen Verbindungen gemäß Ansprüchen 1 bis 4. Dieses Verfahren gemäß Anspruch 5 beinhaltet die Umsetzung eines Organosilanamins der Formel (5) mit einem Isothiocyanat der Formel (6) und kann durch die Gleichung

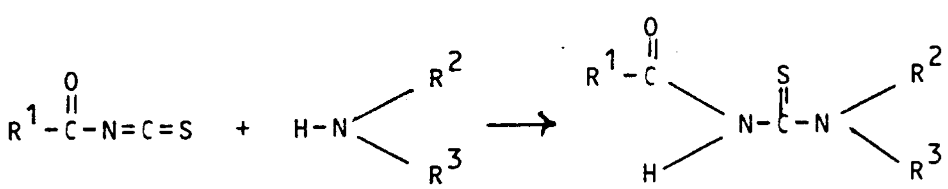 (I)

beschrieben werden. Beispiele für besonders wichtige primäre und sekundäre Organosilanamine, die vor allem bei der Herstellung von Verbindungen nach Anspruch 3 bzw. Anspruch 4 eingesetzt werden, sind

$H_2N - CH_2CH_2CH_2-Si(OC_2H_5)_3$

bzw.

$HN [CH_2CH_2CH_2Si(OC_2H_5)_3]_2$

und deren entsprechende Methoxihomologen. Derartige Ausgangsstoffe sind im technischen Maßstab verfügbar. Die Umsetzung eines Isothiocyanats mit einem primären oder sekundären Amin ist eine prinzipiell bekannte Reaktion in der organischen Synthese und z. B. auch in der EP-OS 0 126 934

beschrieben. Gleichfalls prinzipiell bekannt ist auch die Synthese von Acylisothiocyanaten,die nach EP-OS 0 126 934 gemäß der Gleichung

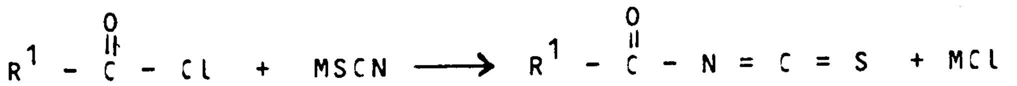 (II)

aus den entsprechenden Benzoylchloriden und Alkali- oder Ammoniumrhodanid in einem inerten und weitgehend wasserfreien organischen Lösungsmittel hergestellt werden können. Geeignete organische Lösungsmittel sind z. B. Aceton, Tetrahydrofuran oder Dioxan. Die Reaktion läuft in der Regel schon bei Raumtemperatur und darunter mit relativ hoher Geschwindigkeit ab und kann durch Zusatz eines Phasentransferkatalysators noch weiter beschleunigt werden.

Sehr spontan schon bei niedrigen Temperaturen läuft auch nach dem erfindungsgemäßen Verfahren gemäß Anspruch 5 die exotherme Umsetzung nach Gleichung (I) ab. Zur Vermeidung von möglichen Nebenreaktionen werden deshalb grundsätzlich relativ niedrige Temperaturen bevorzugt, ein besonders günstiger Bereich liegt bei Temperaturen von -30° C bis +50° C. Obwohl prinzipiell auch andere stöchiometrische Verhältnisse eingesetzt werden können, ist eine 1 : 1-molare Stöchiometrie gemäß Gleichung (I) vorzuziehen.

Generell möglich ist auch eine Herstellung der erfindungsgemäßen Benzoylthioharnstoffgruppen-haltigen Organosilane durch eine Umsetzung gemäß Gleichung (III)

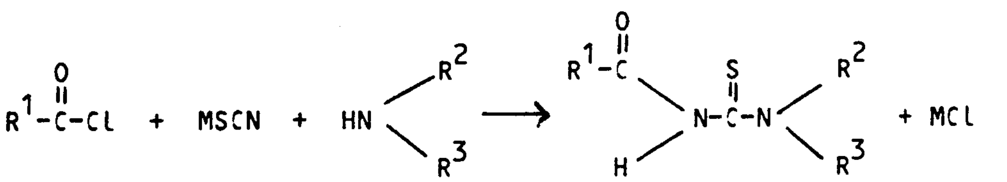 (III)

nach der nur eine "in situ"-Bildung der Benzoylisothiocyanat-Komponente erfolgt. Diese Umsetzung ist jedoch gegenüber der erfindungsgemäßen Verfahrensweise gemäß Anspruch 5 (Gleichung I) wegen erhöhter Nebenproduktbildung benachteiligt.

Nach dem erfindungsgemäßen Herstellungskonzept kann grundsätzlich auf den Einsatz eines Lösungsmittels verzichtet werden.

Im Hinblick auf höhere Produktreinheit und der besseren praktischen Durchführung kann sich jedoch der Einsatz eines weitgehend wasserfreien Lösungsmittels als vorteilhaft erweisen. Geeignet hierfür sind u. a. Toluol, Xylol, chlorierte Kohlenwasserstoffe, offenkettige und cyclische Ether oder Ester, wie z. B. Acetessigester, aliphatische oder cycloaliphatische Kohlenwasserstoffe mit 5 bis 8 C-Atomen. Besonders bevorzugt sind lineare oder verzweigte Alkohole mit 1 bis 3 C-Atomen und Aceton oder Methylethylketon.

Die erfindungsgemäßen Benzoylthioharnstoffgruppen-haltigen Organosilane stellen hellgelbe bis orangefarbene Flüssigkeiten dar, die alle weit über 200° C sieden. Nachdem gemäß dem Verfahren nach Anspruch 5 die neuen Produkte in für alle Anwendungen ausreichender Reinheit erhalten werden können, kann auf eine weitere destillative Reinigung, die in fast allen Fällen mit zumindest teilweiser Zersetzung verbunden ist, verzichtet werden.

Die Erfindung wird nachfolgend anhand von Ausführungsbeispielen weiter erläutert.

Beispiel 1

200 g (0,903 Mol) $H_2N-(CH_2)_3-Si(OC_2H_5)_3$ (Aminopropyltriethoxisilan) wurden in einem mit trockenem Stickstoff gespülten 1 l Vierhalskolben mit KPG-Rührer, Tropftrichter, Rückflußkühler und Innenthermometer vorgelegt. Innerhalb einer Stunde wurden zu dem vorgelegten Aminosilan 147,4 g (0,903 Mol) Benzoylisothiocyanat zudosiert.

Durch Kühlung mit einem Wasserbad wurde dabei die Innentemperatur bei 20° C gehalten. Nach weiterem 1-stündigem Rühren bei Raumtemperatur wurde die orangefarbene Flüssigkeit an einem Dünnfilmverdampfer bei einer Temperatur von 120° C/1 mbar von leichtflüchtigen Bestandteilen befreit. Im Sumpf des Dünnfilmverdampfers verblieben 334,8 g Produkt (96,4 % der Theorie), dessen Analysendaten und NMR-Spektrum in Übereinstimmung mit der chemischen Struktur

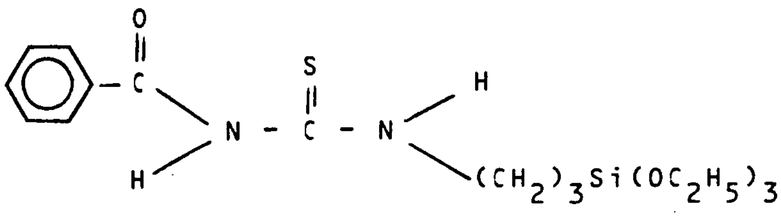

waren.

| | % C | % H | % N | % S | % Si |
|---|---|---|---|---|---|
| Theorie: | 53,10 | 7,34 | 7,28 | 8,34 | 7,30 |
| Gefunden: | 52,83 | 7,42 | 7,37 | 8,21 | 7,12 |

$^1$H-NMR-Spektrum ($CDCl_3$/250 MHz):$\delta$ $-CH_2Si$ -0,72 ppm, $\delta$ $-CH_2-$ -1,85 ppm, $\delta$ $N-CH_2-$ -3,75 ppm, $\delta$ ortho C-H -7,85 ppm, $\delta$ meta C-H -7,5 ppm, $\delta$ para C-H -7,6 ppm

Beispiel 2

200 g (1,12 Mol) $H_2N-(CH_2)_3-Si(OCH_3)_3$ (Aminopropyltrimethoxisilan) und 182,0 g (1,12 Mol) Benzoylisothiocyanat wurden analog Beispiel 1 umgesetzt und das erhaltene Rohprodukt in gleicher Weise aufgearbeitet.

Erhalten wurden 368,4 g (96,0 % der Theorie) des Benzoylthioharnstoff-funktionellenSilans der Formel

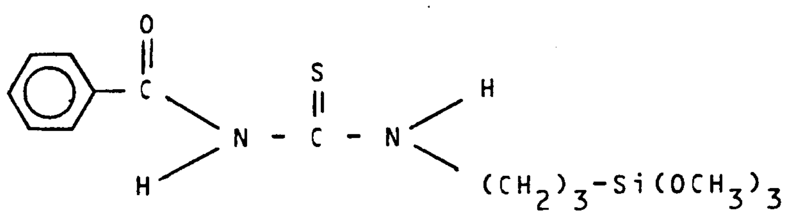

| | % C | % H | % N | % S | % Si |
|---|---|---|---|---|---|
| Theorie: | 49,10 | 6,48 | 8,18 | 9,36 | 8,20 |
| Gefunden: | 49,01 | 6,52 | 8,08 | 9,27 | 8,04 |

$^1$H-MNR-Spektrum ($CDCl_3$/250 MHz): Analog zu Beispiel 1

Beispiel 3

150 g (0,54 Mol) $H_2N-(CH_2)_{10}-Si(OCH_3)_3$ (Aminodecyltrimethoxisilan) und 88,2 g (0,54 Mol) Benzoylisothiocyanat wurden analog zu Beispiel 1 in 200 ml getrocknetem Aceton bei 40° C umgesetzt. Nach dem destillativen Entfernen des Acetons am Rotationsverdampfer bei 50° C/100 mbar und Reinigung des Rohprodukts am Dünnschichtverdampfer wurden 224,1 g (94,1 % der Theorie) des Benzoylthioharnstoff-funktionellen Silans der Formel

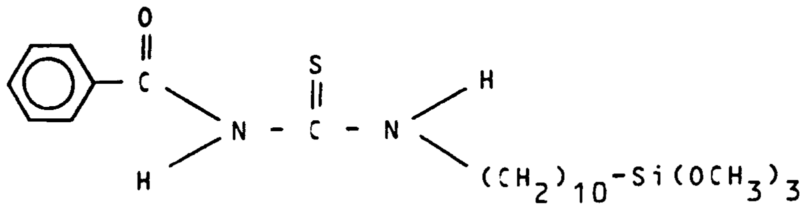

erhalten.

| | % C | % H | % N | % S | % Si |
|---|---|---|---|---|---|
| Theorie: | 57,24 | 8,23 | 6,36 | 7,28 | 6,37 |
| Gefunden: | 57,36 | 8,36 | 6,19 | 7,09 | 6,12 |

Beispiel 4

100 g (0,42 Mol)

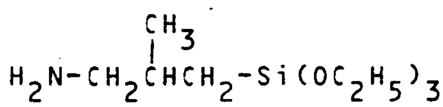

und 88,4 g (0,42 Mol)

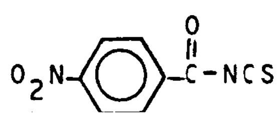

wurden analog Beispiel 3 in 100 ml getrocknetem Ethanol bei 20° C umgesetzt. Nach Aufarbeitung wie in Beispiel 3 wurden 170,2 g Produkt (90,3 % der Theorie) der Formel

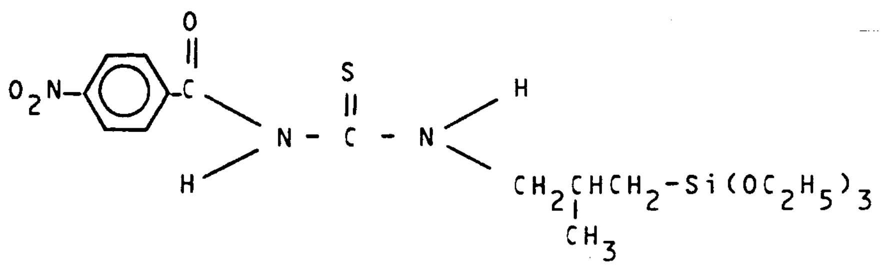

erhalten.

| | % C | % H | % N | % S | % Si |
|---|---|---|---|---|---|
| Theorie: | 48,74 | 6,59 | 9,47 | 7,23 | 6,33 |
| Gefunden: | 48,52 | 6,70 | 9,22 | 7,04 | 6,11 |

Beispiel 5

200 g (0,47 Mol) HN $[(CH_2)_3Si(OC_2H_5)_3]_2$ und 76,7 g (0,47 Mol) Benzoylisothiocyanat wurden analog zu Beispiel 1 in 200 ml getrocknetem Ethanol unter Eiskühlung bei 10° C umgesetzt. Nach einer 1-stündigen Nachreaktion bei Raumtemperatur, dem destillativen Entfernen des Ethanols am Rotationsverdampfer bei 50° C/100 mbar und der Reinigung des Rohprodukts am Dünnschichtverdampfer wurden 262,0 g (94,7 % der Theorie) des Benzoylthioharnstofffunktionellen Silans der Formel

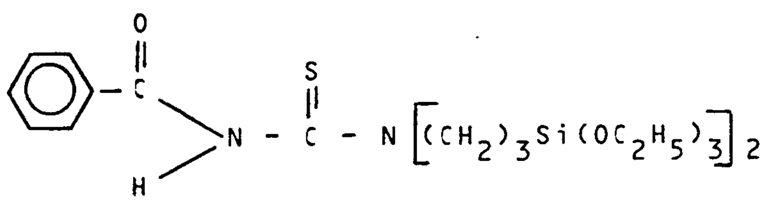

erhalten.

| | % C | % H | % N | % S | % Si |
|---|---|---|---|---|---|
| Theorie: | 53,03 | 8,22 | 4,76 | 5,44 | 9,54 |
| Gefunden: | 52,79 | 8,12 | 4,67 | 5,30 | 9,39 |

Beispiel 6

Aus 100 g (0,19 Mol) HN $[(CH_2)_{10}Si(OCH_3)_3]_2$ und 38,7 g (0,19 Mol)

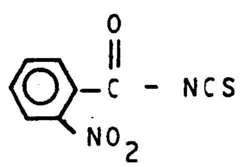

wurden analog Beispiel 5 nach Umsetzung in 100 ml Methanol bei 20° C 126,2 g (91,0 % der Theorie) des Produkts

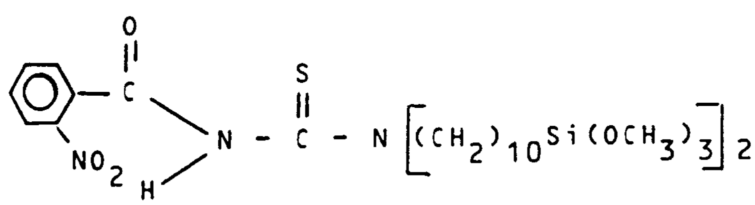

erhalten.

| | % C | % H | % N | % S | % Si |
|---|---|---|---|---|---|
| Theorie: | 54,73 | 8,51 | 5,63 | 4,30 | 7,53 |
| Gefunden: | 54,49 | 8,31 | 5,67 | 4,25 | 7,35 |

Beispiel 7

Aus 100 g (0,34 Mol)

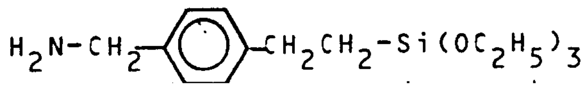

und 54,9 g (0,34 Mol) Benzoylisothiocyanat wurden analog Beispiel 5 nach Umsetzung in 100 ml getrocknetem Ethanol bei 20° C 142,3 g (91,9 % der Theorie) des Produkts

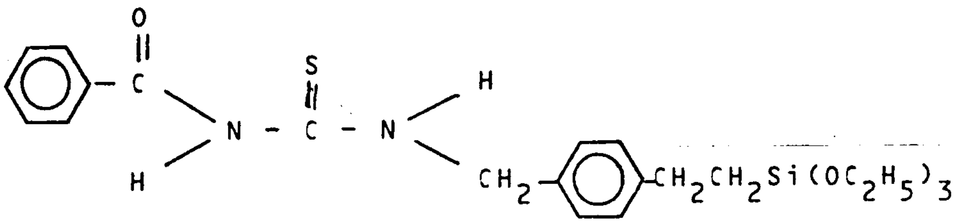

erhalten.

| | % C | % H | % N | % S | % Si |
|---|---|---|---|---|---|
| Theorie: | 59,97 | 7,00 | 6,08 | 6,96 | 6,10 |
| Gefunden: | 59,58 | 7,24 | 5,86 | 6,72 | 5,91 |

**Patentansprüche**

**1.** Benzoylthioharnstoffgruppen-haltige Organosilane der Formel

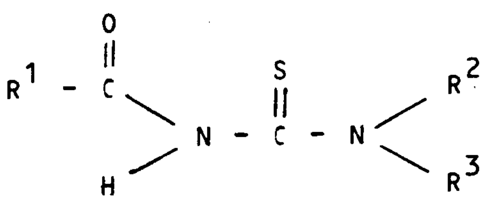

(1)

wobei $R^1$ für eine Phenyl- oder für eine mit einer $NO_2$-Gruppe substituierte Phenylgruppe, $R^2$ für Einheiten der Formel

$R^4 - Si(OR)_3$ (2)

steht, in der $R^4$ eine Alkylengruppe mit 1 bis 10 C-Atomen oder eine Cycloalkylengruppe mit 5 bis 8 C-Atomen oder Einheiten der Formeln

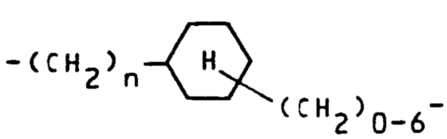

bzw.

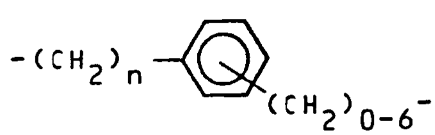

bedeutet, wobei n eine Zahl von 1 bis 6 sein kann, und R für einen linearen oder verzweigten Alkylrest

mit 1 bis 3 C-Atomen steht,
$R^3$ dieselbe Bedeutung wie $R^2$ haben und dabei identisch mit oder verschieden von $R^2$ sein kann oder für H steht.

**2.** Benzoylthioharnstoffgruppen-haltige Organosilane gemäß Anspruch 1,
**dadurch gekennzeichnet,**
daß $R^4$ eine lineare oder verzweigte Alkylengruppe ist.

**3.** Benzoylthioharnstoffgruppen-haltige Organosilane gemäß Ansprüchen 1 oder 2 mit der Formel

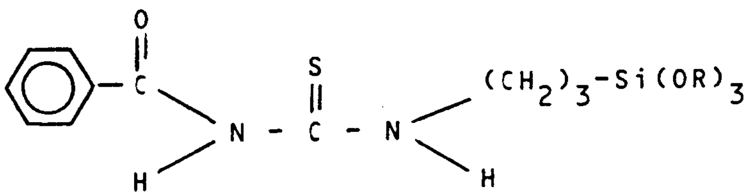

(3)

wobei R für Methyl oder Ethyl steht.

**4.** Benzoylthioharnstoffgruppen-haltige Organosilane gemäß Anspruch 1 oder 2 mit der Formel

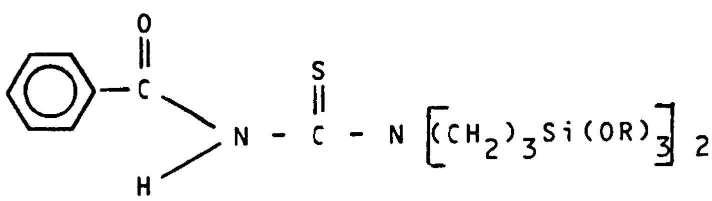

(4)

wobei R für Methyl oder Ethyl steht.

**5.** Verfahren zur Herstellung der erfindungsgemäßen Verbindungen gemäß Ansprüchen 1 bis 4,
**dadurch gekennzeichnet,**
daß ein Organosilanamin der Formel

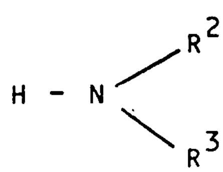

(5)

wobei $R^2$ und $R^3$ dieselbe Bedeutung wie in Anspruch 1 haben,
mit einem Isothiocyanat der Formel

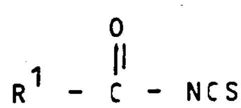

(6)

wobei $R^1$ dieselbe Bedeutung wie in Anspruch 1 hat, unterhalb, bei oder oberhalb Raumtemperatur bis zu einer Temperatur von 100° C, bei Normaldruck oder einem Überdruck, welcher der Summe der Partialdrucke bei der jeweiligen Temperatur entspricht, bis zur vollständigen Abreaktion der Isothiocyanatfunktion in Formel (6) umgesetzt wird.

**6.** Verfahren gemäß Anspruch 5,
**dadurch gekennzeichnet,**

daß die Umsetzung vorzugsweise bei einer Temperatur von -30° C bis +50° C durchgeführt wird.

7. Verfahren gemäß Ansprüchen 5 und 6,
**dadurch gekennzeichnet,**
daß als Lösungsmittel bei der Umsetzung des Amins der Formel (5) mit dem Isothiocyanat der Formel (6) ein linearer oder verzweigter Alkohol mit 1 bis 3 C-Atomen, Aceton oder Methyläthylketon verwendet wird.

## Claims

1. Benzoylthiourea group-containing organosilanes corresponding to the formula

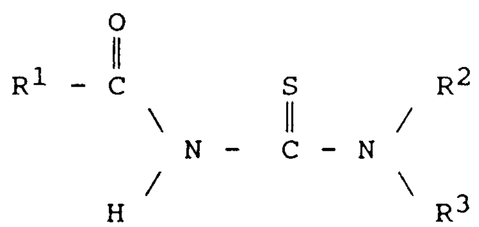

(1)

wherein $R^1$ stands for a phenyl group or a phenyl group substituted with an $NO_2$-group,
$R^2$ stands for units of the formula

$R^4$ - $Si(OR)_3$ (2)

in which $R^4$ denotes an alkylene group having 1 to 10 carbon atoms or a cycloalkylene group having 5 to 8 carbon atoms or units corresponding to the formulae

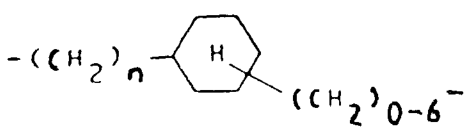 or 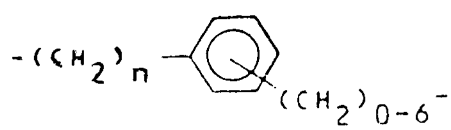

wherein n may stand for a number from 1 to 6 and R stands for a straight chain or branched alkyl group having 1 to 3 carbon atoms, and
$R^3$ has the same meaning as $R^2$ and may be identical to or different from $R^2$ or stand for H.

2. Benzoyl thiourea group-containing organosilanes according to Claim 1, characterised in that $R^4$ is a straight chain or branched alkylene group.

3. Benzoyl thiourea group-containing organosilanes according to Claims 1 or 2 corresponding to the formula

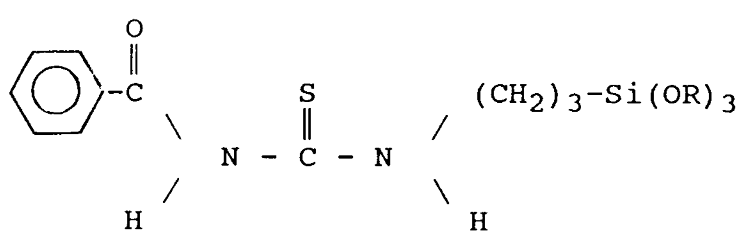

(3)

wherein R stands for methyl or ethyl.

4. Benzoyl thiourea group-containing organosilanes according to Claim 1 or 2 corresponding to the formula

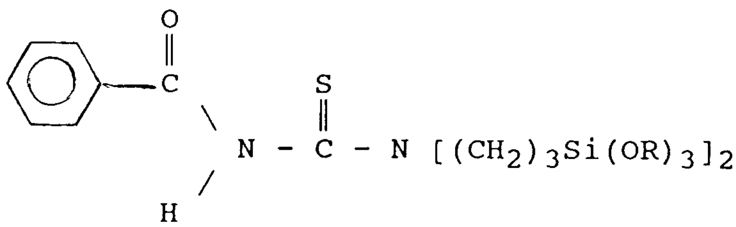
(4)

wherein R stands for methyl or ethyl.

**5.** A process for the preparation of the compounds according to the invention as claimed in Claims 1 to 4, characterised in that an organosilamine corresponding to the formula

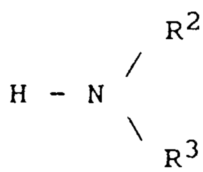
(5)

wherein $R^2$ and $R^3$ have the same meaning as in Claim 1
is reacted with an isothiocyanate corresponding to the formula

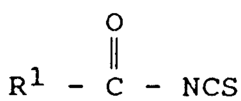
(6)

wherein $R^1$ has the same meaning as in Claim 1 at or above room temperature up to a temperature of 100 °C, at normal or excess pressure corresponding to the sum of the partial pressures at the given temperature until the isothiocyanate function of formula (6) has completely reacted.

**6.** A process according to Claim 5, characterised in that the reaction is preferably carried out at a temperature of -30 °C to +50 °C.

**7.** A process according to Claims 5 and 6, characterised in that the solvent used for the reaction of the amine of formula (5) with the isothiocyanate of formula (6) is a straight chain or branched alcohol having 1 to 3 carbon atoms, acetone or methyl ethyl ketone.

**Revendications**

**1.** Organosilanes contenant des groupes benzoylthiourée de formule

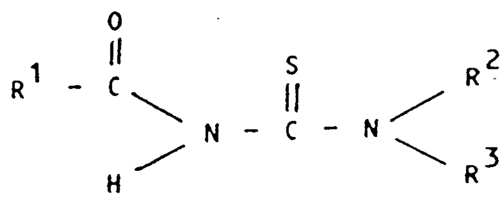
(1)

dans laquelle $R^1$ représente un groupe phényle ou un groupe phényle substitué par un radical $NO_2$,
$R^2$ représente des motifs de formule

$R^4 - Si(OR)_3$ (2)

dans laquelle $R^4$ représente un groupe alkylène ayant de 1 à 10 atomes de carbone, ou un groupe cycloalkylène ayant de 5 à 8 atomes de carbone, ou des motifs de formules

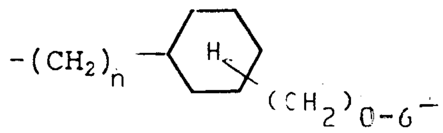

ou

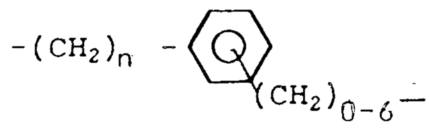

n pouvant être un nombre entier valant de 1 à 6, et R représente un radical alkyle linéaire ou ramifié ayant de 1 à 3 atomes de carbone,
$R^3$ peut avoir la même signification que $R^2$ et en ce cas être identique à $R^2$ ou différent de celui-ci, ou représente H.

2. Organosilanes contenant des groupes benzoylthiourée selon la revendication 1, caractérisés en ce que $R^4$ est un groupe alkylène linéaire ou ramifié.

3. Organosilanes contenant des groupes benzoylthiourée selon la revendication 1 ou 2, de formule

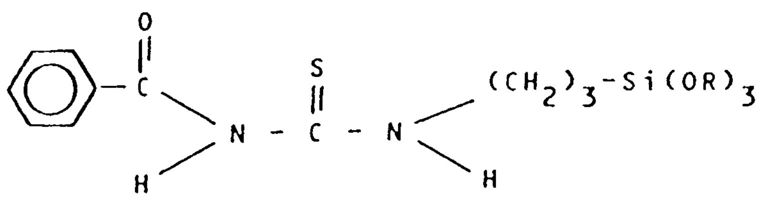

(3)

dans laquelle R représente le groupe méthyle ou éthyle.

4. Organosilanes contenant des groupes benzoylthiourée selon la revendication 1 ou 2, de formule

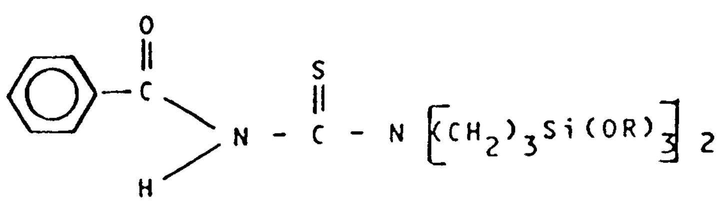

(4)

dans laquelle R représente le groupe méthyle ou éthyle.

5. Procédé pour la préparation des composés de l'invention, selon l'une quelconque des revendications 1 à 4, caractérisé en ce que l'on fait réagir une organosilanamine de formule

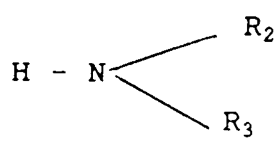

(5)

dans laquelle $R^2$ et $R^3$ ont les mêmes significations que dans la revendication 1,avec un isothiocyanate de formule

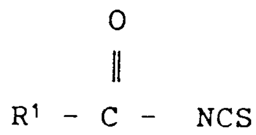 (6)

dans laquelle $R^1$ a la même signification que dans la revendication 1, à une température inférieure, égale ou supérieure à la température ambiante, jusqu'à une température de 100 ° C, à la pression normale ou sous une surpression qui correspond à la somme des pressions partielles à la température respective, jusqu'à ce que la fonction isothiocyanate dans la formule (6) ait complètement cessé de réagir.

**6.** Procédé selon la revendication 5, caractérisé en ce que la réaction est effectuée de préférence à une température de - 30 ° C à + 50 ° C.

**7.** Procédé selon les revendications 5 et 6, caractérisé en ce que, dans la réaction de l'amine de formule (5) avec l'isothiocyanate de formule (6), on utilise en tant que solvant, un alcool linéaire ou ramifié ayant de 1 à 3 atomes de carbone, l'acétone ou la méthyléthylcétone.